(19) Europäisches Patentamt
European Patent Office
Office européen des brevets

(11) Numéro de publication: **0 433 139 A1**

# (12) DEMANDE DE BREVET EUROPEEN

(21) Numéro de dépôt: **90403465.9**

(22) Date de dépôt: **06.12.90**

(51) Int. Cl.5: **C02F 3/12**, C02F 3/06, C02F 3/10, C02F 3/30

Le titre de l'invention a été modifié (Directives relatives à l'examen pratiqué à l'OEB, A-III, 7.3)

(30) Priorité: **15.12.89 FR 8916642**

(43) Date de publication de la demande: **19.06.91 Bulletin 91/25**

(84) Etats contractants désignés: **AT BE CH DE DK ES FR GB GR IT LI LU NL SE**

(71) Demandeur: **ATOCHEM**
**4 & 8, Cours Michelet La Défense 10**
**F-92800 Puteaux(FR)**

(72) Inventeur: **Martin, Guy**
**34, rue des Loners**
**F-35510 Cesson Sévigné(FR)**
Inventeur: **Pouillot, Michel**
**Le Monastère, 2, allée des Tilleuls**
**F-92410 Ville D'Avray(FR)**
Inventeur: **Blanchard, Gilbert**
**22, rue du Pont de Sévigné**
**F-35510 Cesson Sévigné(FR)**

## (54) Réacteur et procédé de nitrification biologique aérobie d'effluents et support de biomasse nitrifiante.

(57) L'invention concerne un procédé biologique de nitrification aérobie d'effluents.

Selon ce procédé, la biomasse est fixée sur un support solide granulaire jouant le rôle de substrat pour ladite biomasse.

Ce procédé s'applique tout particulièrement au traitement d'eaux usées en vue d'en éliminer l'azote ammoniacal.

EP 0 433 139 A1

# SUPPORT DE BIOMASSE NITRIFIANTE, REACTEUR ET PROCEDE BIOLOGIQUE DE NITRIFICATION AEROBIE D'EFFLUENTS METTANT EN OEUVRE UN TEL SUPPORT PROCEDE D'ELIMINATION DE COMPOSES AZOTES

La présente invention concerne un procédé de traitement d'eaux usées visant à éliminer l'azote ammoniacal (ou ion $NH_4^+$) en fortes concentrations.

On sait que l'azote ammoniacal participe au développement d'algues, ce qui peut conduire à l'eutrophisation des rivières ou des lacs, est toxique pour la faune aquatique, accélère la corrosion des conduites en particulier en cuivre et provoque une augmentation des besoins en chlore et des temps de contact nécessaires à une stérilisation correcte des eaux à potabiliser.

Il existe plusieurs méthodes d'élimination de l'azote ammoniacal parmi lesquelles on peut distinguer :

- les méthodes de traitement physico-chimique des eaux usées telles que l'oxydo-réduction de l'azote ammoniacal, l'extraction des composés azotés par précipitation, échange d'ions ou stripping.
- les méthodes de traitement biologique où des micro-organismes assurent la nitrification aérobie de l'azote ammoniacal.

Par nitrification des ions $NH_4^+$ on entend l'oxydation des ions $NH_4^+$ en ions nitrite ($NO_2^-$) et/ou nitrate ($NO_3^{2-}$) et éventuellement l'oxydation des ions nitrite en ions nitrate.

Par nitrification biologique aérobie, on entend les réactions d'oxydation, telles que définies ci-dessus, qui se déroulent en présence d'air et/ou d'oxygène et où des micro-organismes (bactéries...) en présence d'oxygène assurent ladite oxydation.

La biomasse la plus couramment utilisée est constituée par un mélange de bactéries nitritantes (par exemple les nitrosomonas) et de bactéries nitratantes (par exemple nitrobacters).

On peut également utiliser des bactéries nitrifiantes parmi lesquelles on peut citer les arthrobacter globiformis, les aspergillus flavus et les aspergillus ventii.

Dans les procédés biologiques de nitrification aérobie, on préfère en général fixer les micro-organismes ou biomasse sur un support solide sous forme granulaire ce qui permet d'atteindre de plus grandes concentrations de biomasse dans le réacteur et d'éviter que les bactéries trop légères ne soient entraînées hors du réacteur.

Les supports connus sont inertes vis-à-vis de l'activité nitrifiante de la biomasse, c'est-à-dire qu'ils ne participent pas à la nitrification.

On peut citer les supports à base de charbon actif, de terres diatomées, de sable, de céramiques ou de perles de verre.

Les supports de biomasse mis au point par la demanderesse sont également sous forme granulaire mais jouent le rôle de substrat pour la biomasse nitrifiante c'est-à-dire qu'ils sont consommés pendant la nitrification.

Ils sont à base de carbonate(s) solide(s) dans les conditions de nitrification et peuvent être d'origine naturelle ou non ; on peut citer $CaCO_3$, $MgCO_3$, la dolomite, le calcaire, le corail et de préférence le maërl.

Le maërl de coût peu élevé ne se désagrège pas facilement du fait de sa résistance mécanique élevée et permet un bon ancrage des micro-organismes.

Le support de biomasse conforme à l'invention peut être mis en oeuvre dans tout procédé de nitrification aérobie d'effluents aqueux en remplacement des supports inertes.

Après introduction du support dans le réacteur où se déroule la nitrification des effluents, on ensemence ledit support avec la biomasse.

Pour cela, on peut par exemple prélever des bactéries nitrifiantes "en activité" dans un réacteur de nitrification.

Afin d'accélérer le processus d'ensemencement de la biomasse, on apporte en général aux effluents des éléments nutritifs sous forme liquide nécessaires pour la croissance et/ou l'entretien des microorganismes jusqu'à fixation d'une couche suffisamment épaisse desdits micro-organismes sur le support, que l'on désigne par "boues".

Parmi les éléments nutritifs, on peut citer les phosphates, le magnésium, le fer et le cuivre, certains amino-acides.

Les besoins en oxygène de la nitrification sont partiellement comblés par la présence de $CO_2$ ($HCO_3^-$, $CO_3^{2-}$), le reste est apporté par une aération (ou oxygénation) des effluents à nitrifier par exemple par barbotage d'air (ou d'oxygène) directement dans le réacteur ou en effectuant une aération (ou oxygénation) extérieure des effluents avant leur introduction dans le réacteur de nitrification (pré-aération).

Le support et les boues nitrifiantes peuvent constituer un lit fixe mais les échanges avec les effluents sont peu nombreux et donc peu efficaces.

On préfère mettre le lit en expansion, par exemple par un recyclage des effluents sous forme d'un flux ascendant en fond de réacteur.

La vitesse de fluidisation ne doit pas être trop élevée sinon les boues risquent d'être arrachées du support et évacuées hors du réacteur.

On parle plutôt de lit agité lorsque l'expansion volumique est inférieure à 30 % de son volume au repos et de lit fluidisé quand elle est supérieure à 30 %.

Dans le cadre du procédé de nitrification aérobie selon l'invention le lit fluidisé est avantageusement préféré.

Le procéde de nitrification est particulièrement adapté pour des effluents dont la concentration en $NH_4^+$ est comprise entre 15 et 500 mg/l.

En général les eaux de rivière ont des teneurs en $NH_4^+$ de l'ordre du mg/l, les eaux résiduaires urbaines en contiennent quelques dizaines de mg/l et les eaux résiduaires industrielles notamment celles d'industries chimiques et agroalimentaires, peuvent renfermer plusieurs centaines de mg/l de $NH_4$ +, voire quelques g/l.

Lorsque les effluents sont assez riches en $NH_4^+$ (concentration supérieure à 100 mg/l) il est préférable de prévoir un recyclage des effluents vers le réacteur.

Le recyclage des effluents peut avantageusement assurer l'expansion du lit.

Le développement et la croissance de la biomasse nitrifiante nécessitent un pH basique, compris en général entre 7 et 9 mais on a remarqué que les micro-organismes peuvent aussi se développer à un pH voisin de 6.

En général la température opératoire est comprise entre 5 et 30° C, la croissance des bactéries augmentant avec la température.

On peut distinguer deux modes de fonctionnement du réacteur :

- pour un faible temps de séjour des eaux dans le réacteur, la réaction chimique majoritaire est la nitritation de l'ammoniaque
- pour un temps de séjour élevé des eaux dans le réacteur, il y a nitritation de l'ammoniaque suivie d'une nitratation.

La demanderesse a également remarqué qu'une concentration importante de biomasse dans le réacteur favorise la nitratation de l'ammoniaque alors qu'une concentration plus faible favorise la nitritation.

Etant donné que le carbonate joue le rôle de substrat pour la biomasse, le support selon l'invention est consommé au fur et à mesure de la nitrification des effluents.

Il faut donc veiller à ce que le substrat soit en quantité suffisante, d'une part pour pouvoir supporter la biomasse et d'autre part pour que la vitesse de nitrification des effluents ne diminue de façon significative.

Pour cela on peut par exemple associer un procédé de nitrification conforme à l'invention avec un procédé de dénitrification biologique dans lequel l'activité bactérienne produit des nodules de carbonate de calcium qui peuvent servir de support de biomasse nitrifiante. Dans une telle installation le réacteur de dénitrification est situé en amont et le réacteur de nitrification en aval de sorte qu'il utilise le carbonate de calcium produit lors de la dénitrification à la fois comme support et comme substrat de la biomasse.

Les exemples suivants illustrent l'invention sans toutefois la limiter.

EXEMPLE I

A - DESCRIPTION DE L'INSTALLATION

Le réacteur de nitrification biologique est constitué par une colonne B de hauteur : I m et de diamètre : 8 cm surmontée d'un décanteur D.

Les effluents sont introduits dans la partie inférieure de la colonne C et une partie est recyclée par le fond de la colonne.

La pré-aération des effluents est effectuée dans une colonne A identique à C dans laquelle on on introduit l'air en fond de colonne et récupère les effluents après débullage dans un débulleur G dont une partie alimente le réacteur de nitrification biologique, l'autre étant recyclée dans la colonne d'aération A. (voir Figure I)

B - GARNISSAGE ET ENSEMENCEMENT DU REACTEUR

On introduit 14 g/l de maërl de granulométrie comprise entre 0,05 et 0,20 mm soit 70 g.

Le maërl est un carbonate mixte de calcium et de magnésium.

On prélève 4,5 g de biomasse dans un réacteur de nitrification biologique en activité puis on alimente le réacteur avec une solution d'alimentation contenant 40 mg/l de $(NH_4)_2CO_3$, 43 mg/l de $KHCO_3$, 37 mg/l de

$K_2CO_3$ et 2 mg/l de P sous forme de $KH_2PO_4$.

Au bout de 10 heures, le réacteur de nitrification est en régime stationnaire.

C - RESULTATS EN CONTINU

On mesure la vitesse de recyclage Uo (en m/h), le débit d'alimentation du réacteur Q (en l/h), le débit de recyclage RQ (en l/h), la quantité de biomasse au sein du réacteur Bi (en g/l).

On mesure les concentrations initiales en ammoniaque (exprimées en mg/l d'azote):

- au sein du réacteur : $N\text{-}(NH_4^+)_0$

$$N\text{-}(NH_4^+)_o \quad \frac{(N\text{-}NH_4^+)_o + R \times N\text{-}(NH_4^+)f}{1 + R}$$

- à l'entrée du réacteur : $(N - NH_4^+)_0$

et les concentrations des effluents en $NH_4^+$ $NO_2^-$ et $NO_3^{2-}$, (exprimées en mg/l d'azote) :

$N\text{-}(NH_4^+)f$ , $N\text{-}(NO_2^-)f$ et $N\text{-}(NO_3^{2-})f$,

$NO_2^-$ étant mesuré selon la norme NF T 90-013 et $NO_3^{2-}$ selon la norme NF T 90-012.

Les résultats sont indiqués dans le tableau.

Le réacteur est utilisé en lit fluidisé (vitesse de recyclage comprise entre 4 et 8 m/h).

On étudie le fonctionnement du réacteur pour des concentrations initiales en ammoniaque comprises entre 20 et 500 mg/l.

On note que pour une concentration initiale en ammoniaque de l'ordre de 25 mg/l et un taux de recyclage égal à environ 7, on obtient une nitrification totale de l'ammoniaque. Pour une concentration initiale en ammoniaque de l'ordre de 25 mg/l et un taux de recyclage égal à environ 2, on obtient une bonne élimination de $NH_4^+$ avec formation majoritaire de $NO_3^{2-}$, permettant un fonctionnement dudit réacteur couplé avec un réacteur de dénitrification.

EXEMPLE 2

On utilise un réacteur de volume 60 l et de hauteur 2 m de mêmes caractéristiques que celui de l'Exemple I garni de maërl de granulométrie moyenne égale à 0,l mm (concentration en maërl du réacteur : 7 g/l).

Le réacteur est utilisé en lit fluidisé (vitesse de recyclage comprise entre 4 et 8 m/h).

On étudie le fonctionnement du réacteur pour des concentrations initiales en ammoniaque comprises entre 20 et 500 mg/l.

On note que pour une concentration initiale en ammoniaque de l'ordre de 25 mg/l et un taux de recyclage égal à environ 7, on obtient une nitrification totale de l'ammoniaque. Pour une concentration initiale en ammoniaque de l'ordre de 25 mg/l et un taux de recyclage égal à environ 2, on obtient une bonne élimination de $NH_4^+$ avec formation majoritaire de $NO_3^{2-}$, permettant un fonctionnement dudit réacteur couplé avec un réacteur de dénitrification.

TABLEAU

| Uo | Q | RQ | Bi | $(N-NH_4^+)_o$ | $N-(NH_4^+)_o$ | $N-(NH_4^+)_f$ | $N-(NO_2^-)_f$ | $N-(NO_3^{2-})_f$ | Remarques |
|---|---|---|---|---|---|---|---|---|---|
| 8,4 | 1,9 | 42 | 22,5 | 100 | 62 | 60 | 18 | 8 | |
| 6,8 | à | 34 | 28 | 109 | 57,2 | 64,5 | 5 | 23 | |
| 5,4 | | 27 | 32,5 | 105 | 44,5 | 40,2 | 1 | 40 | |
| 4 | 2,2 | 20 | 36 | 100 | 28,5 | 28,5 | < 0,1 | 58 | |
| | 0,1 | 19 | 36 | 465 | 2,44 | < 0,1 | 40 | 380 | |
| | 0,2 | à | à | 490 | 2,56 | 0,1 | 210 | 230 | Bi = 10 |
| 4 | 0,3 | 22 | 35,3 | 500 | 11,40 | 4,8 | 340 | 110 | -0,66 Uo |
| | 0,4 | | | 485 | 122 | 115 | 270 | 60 | qdUo<4m/h |
| | 1 | 48 | 21,5 | 23 | | 0 | 0 | 23 | |
| | à | à | | 51 | | | | | |
| | 1,2 | 50 | | 71 | | 10 | 12 | 35 | |
| | | | | 93 | | 25 | 35 → 15 | 20 → 40 | |
| | | | | 254 | | 200 | 30 | 20 | |
| | 2,5 | 17,5 | 35,5 | 25 | 3,53 | 0 | < 0,1 | 21 | |
| | 5 | 15 | | | 6,28 | 0,25 | 5 | 15 | |
| 4 | 6 | 14 | à | | 9,75 | 3,4 | 8,1 | 10,5 | |
| | 8 | 12 | 36 | | 15,25 | 8,7 | 13,5 | 1 | |
| | 10 | 10 | | | 18,60 | 12,2 | 10 | < 0,5 | |

## Revendications

1. Réacteur de nitrification biologique aérobie d'effluents contenant des ions $NH_4^+$, caractérisé en ce que la biomasse nitrifiante est fixée sur un support sous forme granulaire qui joue le rôle de substrat pour la biomasse, de préférence à base de carbonate(s) solide(s) et en ce que la nitrification se fait en lit agité ou fluidisé.

2. Réacteur selon la revendication 1, caractérisé en ce que le support de biomasse nitrifiante est à base de carbonate(s) solide(s).

3. Réacteur selon la revendication 1 ou 2, caractérisé en ce que le support de biomasse nitrifiante contient du $CaCO_3$ et/ou du $MgCO_3$.

4. Réacteur selon la revendication 3, caractérisé en ce que le support de biomasse nitrifiante est à base de maërl.

5. Réacteur selon l'une quelconque des revendications 1 à 4, caractérisé en ce que l'expansion du lit est assurée par un recyclage partiel des effluents.

6. Procédé de nitrification biologique aérobie d'effluents à l'aide d'un réacteur tel que défini dans les revendications 1 à 5.

7. Procédé d'élimination des composés azotés contenus dans des effluents comprenant un procédé de dénitrification, de préférence biologique, couplé avec un procédé de nitrification biologique selon la revendication 6.

8. Procédé selon la revendication 7, caractérisé en ce qu'on ajuste le taux de recyclage des eaux dans le réacteur de nitrification pour obtenir une nitritation majoritaire ou une nitratation importante.

FIGURE 1

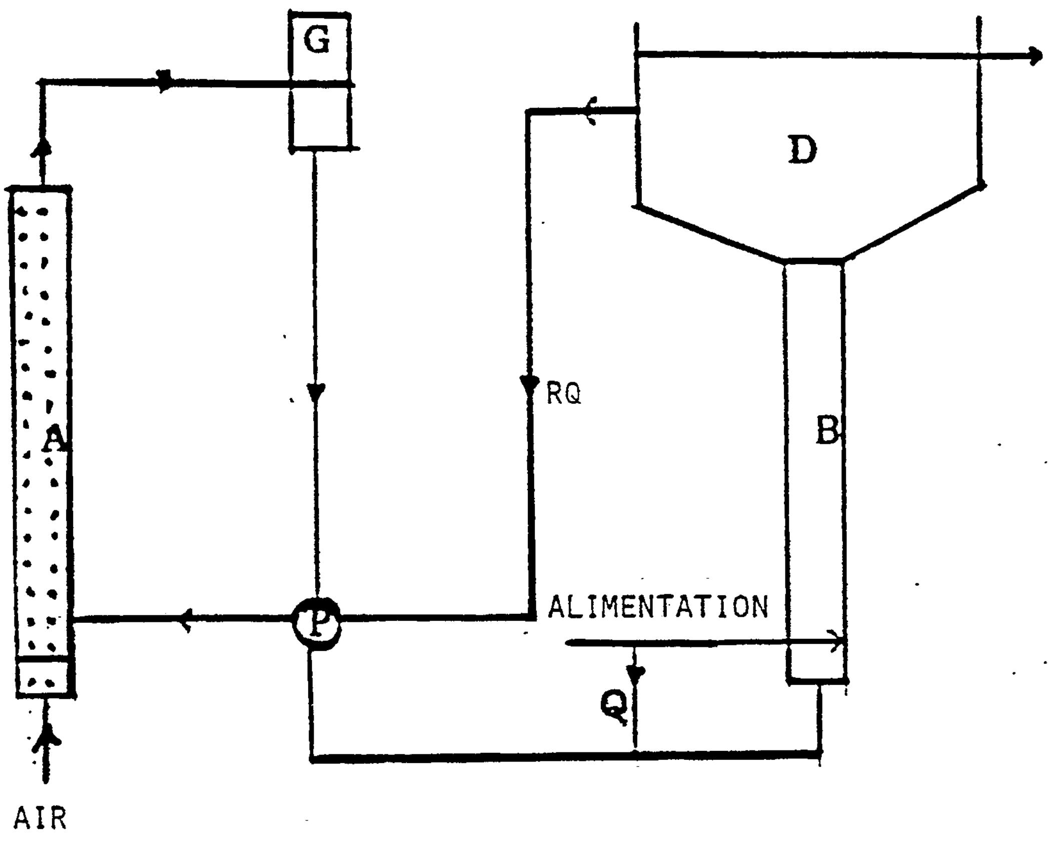

Office européen des brevets

# RAPPORT DE RECHERCHE EUROPEENNE

Numéro de la demande

**EP 90 40 3465**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | P.F. COOPER et al.: "Biological fluidized bed treatment of water and wastewater", 1981, pages 308-312, Ellis Horwood Ltd, Chichester, West Sussex, GB<br>* Page 308, alinéa 18-3: "BFB systems compared with conventional activated sludge treatment" - page 312, alinéa 18.3.3: "Plants designed to produce denitrified effluents"; page 310, figures 18,1c *<br>- - - | 1-8 | C 02 F 3/12<br>C 02 F 3/06<br>C 02 F 3/10<br>C 02 F 3/30 |
| Y | FR-A-2 490 623 (DEGREMONT)<br>* Page 6, revendications 1,3,5; page 2, lignes 5-20; page 2, ligne 28 - page 3, ligne 10 *<br>- - - | 1-8 | |
| Y | EP-A-0 328 474 (J. JAUBERT)<br>* Page 11, revendications 1,3,4; page 7, lignes 3-27 *<br>- - - - - | 1-8 | |

DOMAINES TECHNIQUES RECHERCHES (Int. Cl.5)

C 02 F

Le présent rapport de recherche a été établi pour toutes les revendications

| Lieu de la recherche | Date d'achèvement de la recherche | Examinateur |
|---|---|---|
| La Haye | 13 février 91 | TEPLY J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant